# EUROPEAN PATENT APPLICATION

(11) **EP 1 667 059 A1**
(43) Date of publication of application: **07.06.2006**
(21) Application number: 04771989.3
(22) Date of filing: 20.08.2004
(51) Int. Cl.: G06Q 10/00, B65G 61/00, G08G 1/00, G08G 1/127

(54) **INFORMATION PROCESSOR AND PROCESSING METHOD, INFORMATION PROCESSING SYSTEM, INFORMATION PROCESSING PROGRAM, RECORDING MEDIUM, AND VEHICLE**

(30) Priority: 28.08.2003 JP 2003303995
(71) Applicant: OMRON CORPORATION, Kyoto-shi, Kyoto 600-8530 (JP)
(72) Inventor: KOIKE, Tomoyuki c/o Omron Corporation, Shimogyo-ku, Kyoto-shi, Kyoto 600-8530 (JP); SHIMIZU, Takanobu c/o Omron Corporation, Shimogyo-ku, Kyoto-shi, Kyoto 600-8530 (JP)
(74) Representative: Calderbank, Thomas Roger
(86) International application number: PCT/JP2004/012028
(87) International publication number: WO 2005/022430

(57) **Abstract**

A sensor station (21) installed to a truck (1) receives sensor information transmitted from wireless temperature sensors (32-1) through (32-6) installed inside a container of the truck (1) and stores a temperature variation inside the container during package transportation. When the truck (1) arrives at a delivery center (7), the sensor station (21) transmits data of the temperature variation accumulated in the sensor station (21) to a server (35). A server (20) of an ASP center 2 communicates with the server (35) via the network (4) and obtains the data of the temperature variation. A user (3) accesses the server (20) of the ASP center by a PC (11), a mobile phone (12) or the like, and obtains information on the package temperature variation. The present invention can be applied to a mobile wireless terminal.

## Description

### TECHNICAL FIELD

The present invention relates to an information processing device, an information processing method, an information processing system, an information processing program, a storage medium, and a vehicle. Specifically, the present invention relates to the information processing device, the information processing method, the information processing system, the information processing program, the storage medium, and the vehicle that make it possible to perform highly reliable quality management at low cost.

### BACKGROUND ART

In recent years, in physical distribution industry, there has been an increasing number of physical distribution agencies that do not own trucks, but entrust a delivery company with delivery of goods by trucks owned by the entrusted delivery company (hereinafter referred to as chartered trucks), in order to cut down costs such as maintenance cost of the truck and personnel cost of a driver.

On the other hand, in these years, consumers' interest in quality and safety of food and the like has been growing. Accordingly, needs for quality (for example, temperature variation) management on a goods physical distribution (transportation) process by food companies or the physical distribution agencies is increasing. For the management of food temperature, it is possible to manage a temperature variation by obtaining (sensing) an output of a temperature sensor provided near the food (goods).

Moreover, recently, a digital tachograph is used as a mechanism for managing physical distribution conditions. It is also taken into consideration to add a temperature management function as an optional function of the digital tachograph. A method proposed is a recording method for recording, into a recording medium, various kinds of data necessary for vehicle operation management together with a temperature inside a cooling box of a refrigerator truck (For example, refer to Japanese Unexamined Patent Publication No. 126902/ 1997 (Tokukaihei 9-126902)).

However, in order to always obtain temperature information outputted from the temperature sensor, a great amount of communication cost is necessary. Accordingly, there has been the problem of cost increase. Moreover, in a technique disclosed in the Japanese Unexamined Patent Publication No. 126902/1997, a cost accompanying an installation work of a sensor and an operation management device, collection and analysis of data recorded in many trucks, and others are not considered. This causes the problem of inefficient operation because the installation work of the sensor and a controller to the chartered vehicle is required every time the physical distribution agency changes the delivery company to entrust with the transportation of goods, for example. Furthermore, for the introduction of a system such as a digital tachograph, a very high initial cost is necessary. Accordingly, there has been such a problem that a business organization or the physical distribution agency needs to bear a heavy burden.

The present invention has been attained in view of these problems. Accordingly, the present invention makes it possible to carry out highly reliable quality management at low cost.

### DISCLOSURE OF INVENTION

An information processing device according to the present invention is an information processing device, installed to a traveling object, which performs wireless communications with a sensor, including: sensor information obtaining means for obtaining sensor information that the sensor outputs; storage means for storing the sensor information; positional information obtaining means for obtaining positional information determining a position of the information processing device; and processing means for executing predetermined processing on the basis of the sensor information and the positional information.

The information processing device is, for example, a sensor station that obtains the sensor information and transmits the obtained sensor information. The traveling object mentioned above is, for example, a truck. The sensor information obtaining means is, for example, a wireless communication unit. The storage means is, for example, a hard disk drive or a nonvolatile memory. The positional information obtaining means is, for example, a GPS. The processing means is, for example, a microcomputer.

According to the present invention, implementation of quality management is possible. Specifically, it becomes possible to carry out highly reliable quality management at low cost.

For a fuller understanding of the nature and advantages of the invention, reference should be made to the ensuing detailed description taken in conjunction with the accompanying drawings.

### BRIEF DESCRIPTION OF DRAWINGS

FIG.1 is a diagram of an exemplary structure of a. quality management system according to the present invention.
FIG.2 is a block diagram of an exemplary structure of a sensor station as in FIG.1.
FIG.3 is a diagram of external appearances of the sensor station and a wireless temperature sensor.
FIG.4 is a diagram of an example of how the sensor station is installed.
FIG.5 is a diagram of an example of how the wireless temperature sensor is installed.
FIG.6 is a flow chart explaining abnormality determination processing.
FIG.7 is a flow chart explaining abnormal mode processing.
FIG.8 is a flow chart explaining an abnormal mode processing.
FIG.9 is a diagram illustrating an example of sensor information of the wireless temperature sensor.
FIG.10 is a flow chart explaining data processing.
FIG.11 is a flow chart explaining virtual gate judgement processing 1.
FIG.12 is a flow chart explaining data update processing 1.
FIG.13 is a flow chart explaining a virtual gate judgement processing 2.
FIG.14 is a flow chart illustrating a data update processing 2.
FIG.15 is a diagram of an example in which a user uses data accumulated in an ASP center.
FIG.16 is a diagram of a screen displayed in a user's PC.
FIG. 17 is a flow chart explaining data transmission processing.
FIG.18 is a diagram illustrating a position of data transmission.

### BEST MODE FOR CARRYING OUT THE INVENTION

With reference to drawings, an exemplary embodiment of the present invention is explained as follows. Note that content of the present invention is not limited to this explanation.

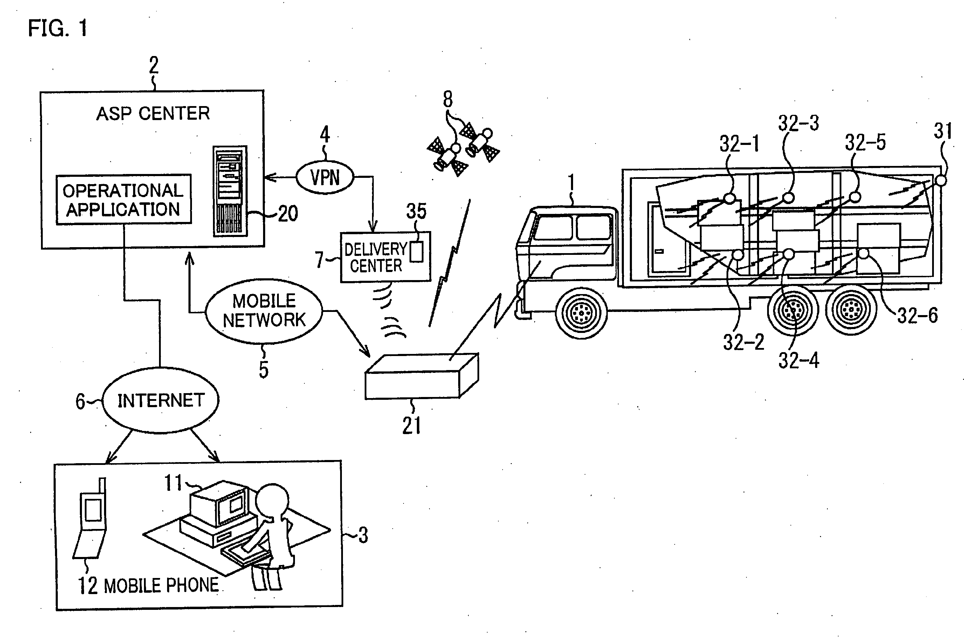

FIG.1 illustrates the entire structure of a quality management system to which the present invention is applied. In this example, a sensor station 21 is installed to a truck 1 which is a chartered truck of a physical distribution company. The truck 1, for example, is a refrigerator truck for transporting food and the like at a low temperature and loads goods (food) for transportation in a container at a rear part of the truck.

The sensor station 21 communicates by wireless with a door sensor 31, wireless temperature sensors 32-1 through 32-6, and an engine sensor that is not illustrated. The door sensor 31 is installed on a door of the container of the truck 1. The wireless sensors 32-1 through 32-6 are installed inside the container. Through the communications, the sensor station 21 obtains outputs (sensor information) of the sensors. The door sensor 31 detects an open/closed state of a container door of the truck 1 and outputs a signal indicating whether the door is opened or closed. Each of the wireless temperature sensors 32-1 through 32-6 measures a temperature around and outputs a signal indicating the temperature measured. The engine sensor detects whether an engine of the truck 1 is ON (operating) or OFF (stopped) and outputs a signal indicating a detected state. Unless otherwise required for distinction, the wireless temperature sensors 32-1 through 32-6 is collectively referred to as a wireless temperature sensor 32, where convenient.

The sensor station 21 receives, via a GPS (Global Positioning System) antenna, a GPS signal which is radiated from a GPS satellite 8 to the ground. Further, the sensor station 21 communicates with a server 35 of a delivery center 7 by using a communication network, such as a short-range wireless communication network provided at the delivery center 7 or a wireless LAN (Local Area Network), when the truck 1 stops near (on premises of) the delivery center 7 where a package is loaded/unloaded in a concentrated manner. By this, the truck 1 sends sensor information data that the truck 1 accumulated to the server 35. The communication network, such as the close range wireless communication or the wireless LAN, provided at the delivery center 7 is a toll-free network. Accordingly, communications of the sensor station 21 with the server 35 of the delivery center 7 via such a network is free of charge.

In practice, there are plural delivery centers 7. Each of the delivery centers 7 is connected to an ASP (Application Service Provider) center 2 via a network 4. The ASP center 2 is an information processing center run by an ASP. The ASP center 2 has a communication function for making an access to the network 4 such as VPN (Virtual Private Network) or the like network, a mobile network 5 using a packet communication function of a mobile phone or the like function, and a network 6 such as Internet or the like. A server 20 of the ASP center 2 obtains sensor information data from the server 35 in communication with the server 35 of the delivery center 7 via the network 4.

Moreover, the server 20 can directly communicate, according to need, with the sensor station 21 via the mobile network 5. When the sensor station 21 communicates with the server 20, the communication of the mobile network 5 is charged. For example, the communication is charged according to a communication amount (the number of packets) or the amount of communication time.

The ASP allows the user 3 whom the ASP has made a contract with beforehand to access the server 20 of the ASP center 2. The user 3 is connected to the ASP center 2 via the network 3 realized by the Internet or the like. The user 3 pays the ASP a predetermined fee and thereby accesses the server 20 of the ASP center 2 via the network 6 by using a terminal, such as a PC 11 or a mobile phone 12, which the user 3 owns. The server 20 of the ASP center 2 performs processing of the accumulated sensor information data (database) by a predetermined operational application and provides a result of the processing to the terminal of the user 3 via the network 6. In this example, one user (for example, one company) is illustrated as the user 3. However, in practice, there are many users.

In this example, it is assumed that the user 3 is, for example, the physical distribution agency entrusting the transportation to the truck 1 that is the chartered truck, or a firm (package owner) entrusting transportation of goods such as food to the physical distribution agency.

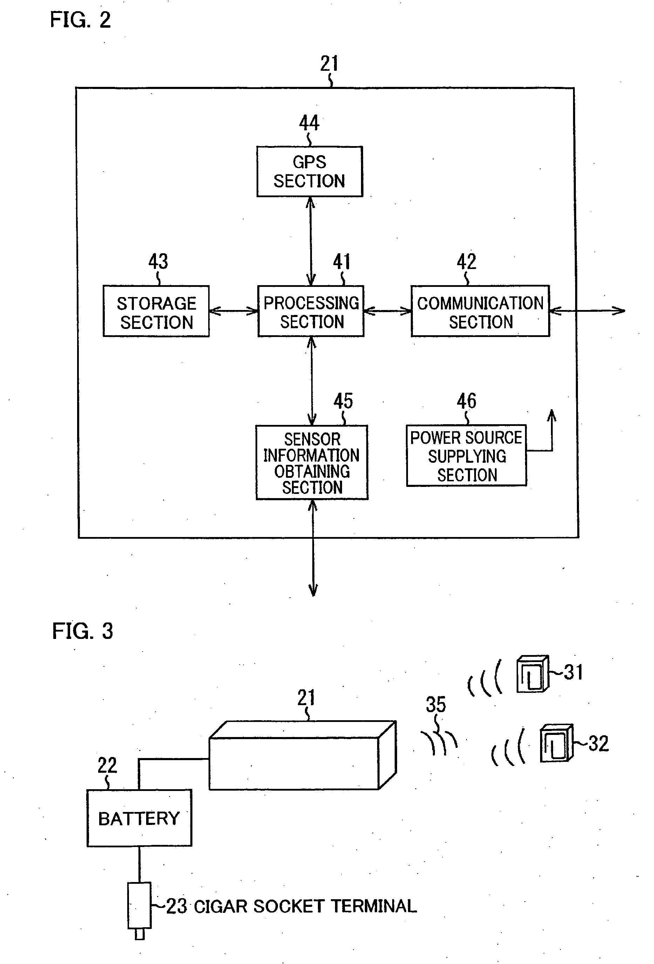

FIG.2 is a block diagram illustrating an example of the structure of the sensor station 21. A communication section 42 is a communication unit for carrying out, by RF (Radio Frequency) communication, the short-range wireless communication typified by Bluetooth communication or a wireless LAN communication or the like typified by IEEE 802.11b communication, or a mobile communication such as a packet communication of the mobile phone. This makes it possible for the sensor station 21 to communicate via the short-range wireless communication network provided at the delivery center 7, or a communication network such as the wireless LAN, or the mobile network 5.

The storage section 43 is realized by, for example, a hard disk drive (HDD) or an EEPROM (Electrically Erasable Programable Read Only Memory) and stores mainly the sensor information obtained from each sensor. The storage section 43 may also be arranged so as to store, according to need, a program, initial setting information of various kinds and the like.

The GPS 44 section, which is connected to a GPS antenna, analyzes a GPS signal received by the GPS antenna and calculates information about a present position (latitude, longitude, altitude and the like).

The sensor information obtaining section 45 carries out an electromagnetic communication with a sensor such as the door sensor 31 and the wireless temperature sensor 32 to obtain the sensor information from each sensor. The sensor information obtaining section 45 and the communication section 42 may be integrated into one communications unit.

The processing section 41 is realized by, for example, a microcomputer, and controls each of the communication section 42, the storage section 43, the GPS section 44 and the sensor information obtaining section 45. The processing section 41, which measures time by a built-in timer, also outputs time information to each section according to need.

The power source supplying section 46 obtains, according to need, power from a power source such as a battery, and supplies the power to each section of the sensor station 21.

Other than these, the sensor station 21 may be provided, according to need, with a display section for displaying information outputted from the processing section 41, an input section for receiving a predetermined command input, and the like.

FIG.3 is a diagram illustrating external appearances of the sensor station 21, the door sensor 31, and the wireless temperature sensor 32. The sensor station 21 is connected to a battery 22. The battery 22 is connected to a cigar socket terminal 23. Moreover, size and weight of the sensor station 21 is, for example, at a level that a person alone can carry around easily. Accordingly, the sensor station 21 can, according to need, be installed, for example, near a driver seat of the truck 1 (for example, a chartered truck used on the day) and receive the supply of power easily from a front-mounted cigar socket. The sensor station 21 can also be detached easily from the truck 1, according to need.

The door sensor 31 and the wireless temperature sensor 32 are compact box-shaped devices which are adequately small in size and light in weight. Accordingly, the door sensor 31 and the wireless temperature sensor 32 can be installed on a wall inside the container of the truck 1, a package of the truck 1 and the like easily by using a magic tape (Registered Trademark), a magnet and the like. Moreover, as mentioned above, each of the door sensor 31 and the wireless temperature sensor 32 includes a wireless communication function and transmits its own sensor information to the sensor station 21 by generating an electromagnetic wave 35.

The wireless temperature sensor 32 measures a surrounding temperature and transmits the sensor information indicating the surrounding temperature to the sensor station 21 at predetermined intervals (for example, every ten minutes). As well, when the wireless temperature sensor 32 receives a polling signal from the sensor station 21, the wireless temperature sensor 32 transmits, to the sensor station 21, the sensor information indicating the surrounding temperature at the point that the wireless temperature sensor 32 receives the polling signal.

The sensor station 21 is usually installed near the driver seat of the truck 1 and the wireless temperature sensor 32 is usually installed inside the container of the truck 1. Accordingly, it is worried that the communication carried out between the sensor station 21 and the wireless temperature sensor 32 is disturbed due to shielding of the electromagnetic wave 35 by the metal container.

However, in practice, for the container of the truck, a material such as rubber is used at a joint section of metal walls constituting a floor section, a ceiling section, a door and the like of the container. Accordingly, the container never becomes a "perfectly sealed metal box." Moreover, it often occurs that the floor section of the container is made of wood or that a material such as rubber is used at a pipe joint section that joints the container and a cooling device. As the result, because the electromagnetic wave 35 leaks from the joint section and the like (a section other than metal), the sensor station 21 and the wireless temperature sensor 32 can communicate without any disturbance. Accordingly, the sensor station 21 and the wireless temperature sensor 32 do not need to include a particular communication function but only needs a communication function for carrying out a general electromagnetic communication. Accordingly, the sensor station 21 and the wireless temperature sensor 32 can be attained at low cost.

Because there are plural wireless temperature sensors 32, the sensor station 21 is arranged to communicate only with a wireless temperature sensor 32 or wireless temperature sensors 32 registered beforehand (for example, the wireless temperature sensors 32-1 through 32-6). The registration of the wireless temperature sensor 32 is carried out by, for example, storing an ID number provided to each wireless temperature sensor into the sensor station 21. When the wireless temperature sensor 32 transmits the sensor information, the wireless temperature sensor 32 transmits the sensor information to which the ID number of the wireless temperature sensor 32 is added. The sensor station 21 determines whether or not the ID number attached to the received sensor information has been registered beforehand and stores, into the memory section 43, the sensor information of the ID number having been registered beforehand.

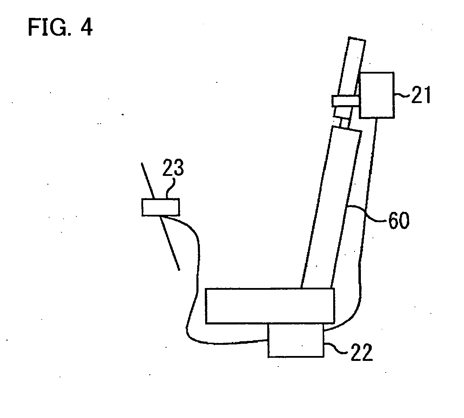

FIG.4 is a diagram of an example of a position where the sensor station 21 is installed. In this example, the sensor station 21, which is fixed by a detachable belt, is installed to an upper part (a rear part of a head rest) of a driver seat 21 of the truck 1. The battery 22 is provided under the seat 60. The battery 22 is not fixed when the battery 22 does not need to be fixed specifically. The cigar socket terminal 23 is connected to the cigar socket of the driver seat. In this way, the sensor station 21 can be installed easily without a specific installation work. Accordingly, the sensor station 21 can be easily installed or detached even when a chartered car is changed.

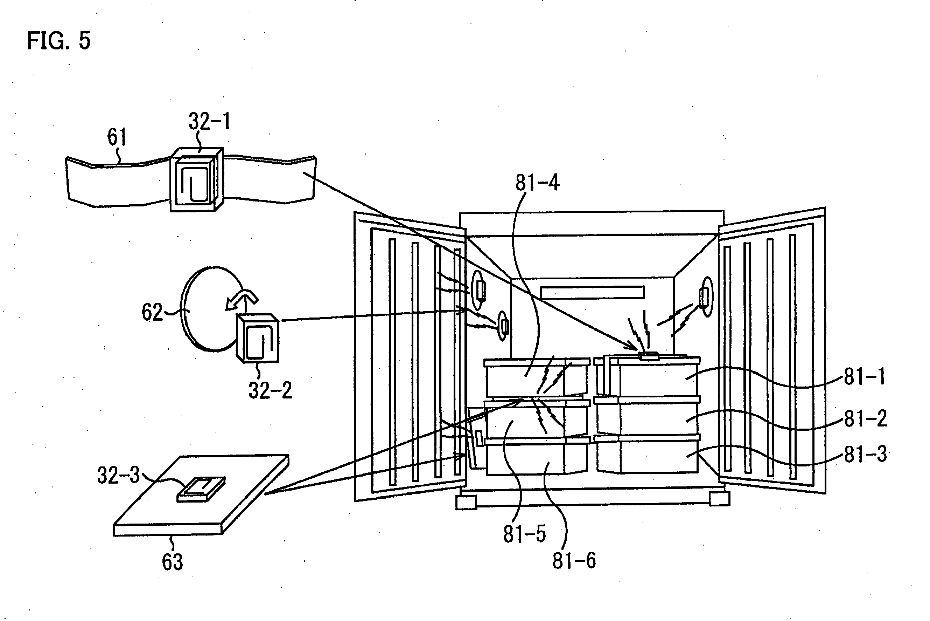

FIG.5 is a diagram of an example of a position where the wireless temperature sensor 32 is installed. The right side of FIG.5 is a diagram when the container, whose door is opened, of the truck 1 is viewed from backward. In this example, the wireless temperature sensor 32-1 is installed by fixation using the magic tape (Registered Trademark) or the like on a fixing belt 61 for binding a package 81-1. The wireless temperature sensor 32-2 is installed by a magnet to an assistant board 62 for the magnet attachment, the assistant board 62 being provided on an inside wall of the container. The wireless temperature sensor 32-3 is embedded in a rectangular interposition board 63. One interposition board 63 is sandwiched between (i) packages 81-5 and 81-6 and (ii) a left wall of the container. Another interposition board 63 is sandwiched between the packages 81-4 and 81-5.

In this way, the wireless temperature sensor 32 as well as the sensor station 21 can be installed easily without any specific installation work. Accordingly, the wireless temperature sensor 32 can be easily installed or detached even when a chartered car or a package is changed.

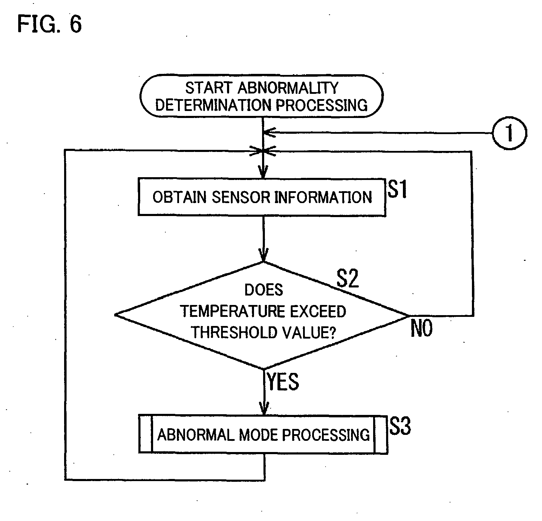

Next, with reference to FIG.6, abnormality determination processing performed by the sensor station 21 is explained. This processing is executed during the time that, for example, the sensor station 21 is operating in an acquisition mode for obtaining the sensor information.

In a step S1, the processing section 41 of the sensor station 21 obtains the sensor information of the wireless temperature sensor 32 from the sensor information obtaining section 45. In a step S2, the processing section 41 determines whether or not a temperature of the sensor information exceeds a predetermined threshold value (for example, -10°C). In the step S2, when it is determined that the temperature of the sensor information does not exceed the threshold value, the processing returns to the step S1.

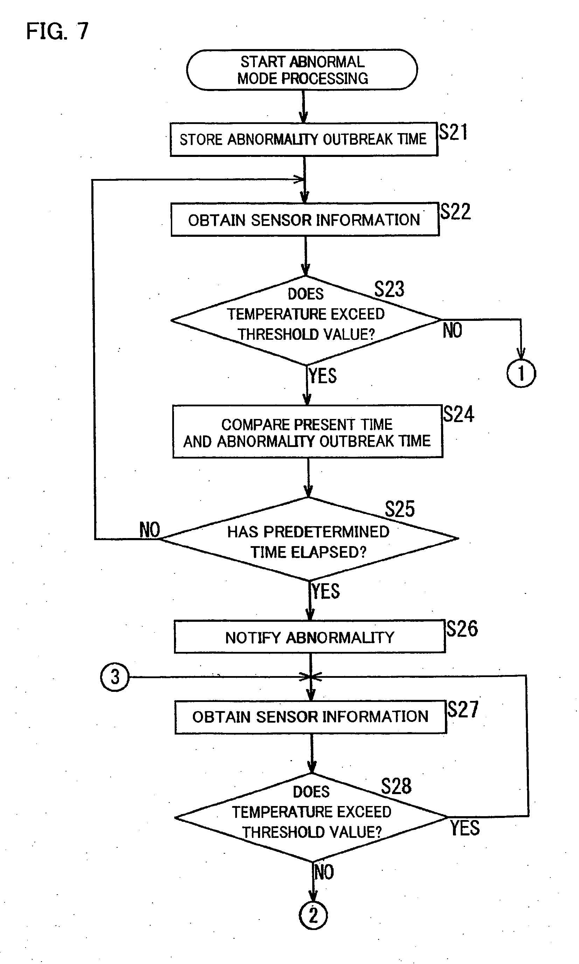

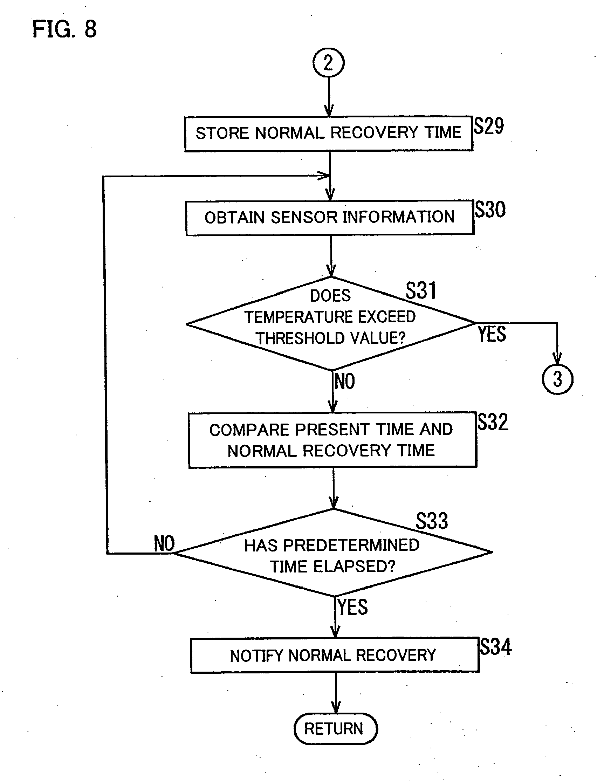

In the step S2, when it is determined that the temperature of the sensor information exceeds the threshold value, the processing section 41 proceeds to a step S3 to performs an abnormal mode processing explained later with reference to FIG.7 and FIG.8.

Here, with reference to FIG.7 and FIG.8, the abnormal mode processing in the step S3 of FIG.6 is explained. In a step S21 of FIG.7, the processing section 41 obtains a present time from the built-in timer and stores the present time as an abnormality outbreak time. Then the processing section 41 proceeds to a step S22 and obtains the sensor information. As mentioned above, the wireless temperature sensor 32 transmits the sensor information at predetermined time intervals (for example, every ten minutes). Accordingly, ten minutes after the sensor information is obtained at the step S1 of FIG.6, the new sensor information of the step S2 is obtained.

In a step S23, the processing section 41 determines whether or not the temperature of the sensor information obtained in the step S22 exceeds the threshold value. When it is determined that the temperature does not exceed the threshold value, the processing returns to the step S1 of FIG.6. On the other hand, when it is determined that the temperature of the sensor information exceeds the threshold value in the step S22, the processing section 41 proceeds to a step S24 and compares the present time and the abnormality outbreak time.

In a step S25, as a result of the comparison in the step S24, the processing section 41 determines whether or not a predetermined time (for example, 20 minutes) from the abnormality outbreak time has elapsed. When it is determined that the predetermined time has not elapsed yet, the processing section 41 returns to the step S22 and repeatedly executes the processing subsequent to the step S22.

When it is determined in the step S25 as the result of the comparison of the step S24 that the predetermined time has elapsed from the abnormality outbreak time, the processing section 41 proceeds to a step S26. In the S26, the processing section 41 accesses the mobile network 5 via the communication section 42 and notifies the abnormality (the temperature rise) to the ASP center 2.

In a step S27, the processing section 41 obtains the next sensor information. In a step 28, the processing section 41 determines whether or not the temperature of the sensor information obtained in the step S27 exceeds the threshold value. When it is determined that the temperature exceeds the threshold value, the processing returns to the step S27. On the other hand, when it is determined in the step 28 that the temperature of the sensor information obtained in the step S27 does not exceed the threshold value, the processing section 41 proceeds to a step S29 and stores the present time as a recovery-to-normal time.

In a step S30, the processing section 41 obtains the next sensor information. In a step S31, the processing section 41 determines whether or not the temperature of the sensor information obtained in the step S30 exceeds the threshold value. When it is determined that the temperature exceeds the threshold value, the processing returns to the step S27 of FIG.7.

In a step S32, the processing section 41 compares the present time and the recovery-to-normal time and determines whether or not the predetermined time (for example, 20 minutes) has been elapsed. When it is determined that the predetermined time has not elapsed yet, the processing returns to the step S30 and the processing subsequent to the step S30 is repeatedly executed.

In a step S33, when it is determined that the predetermined time has elapsed, the processing proceeds to a step S34. The processing section 41 accesses the mobile network 5 via the communication section 42 and notifies recovery to normal (temperature fall) to the ASP center 2.

After the processing in the step S34, the abnormal mode processing is completed and the processing returns to the step S1 of FIG.6.

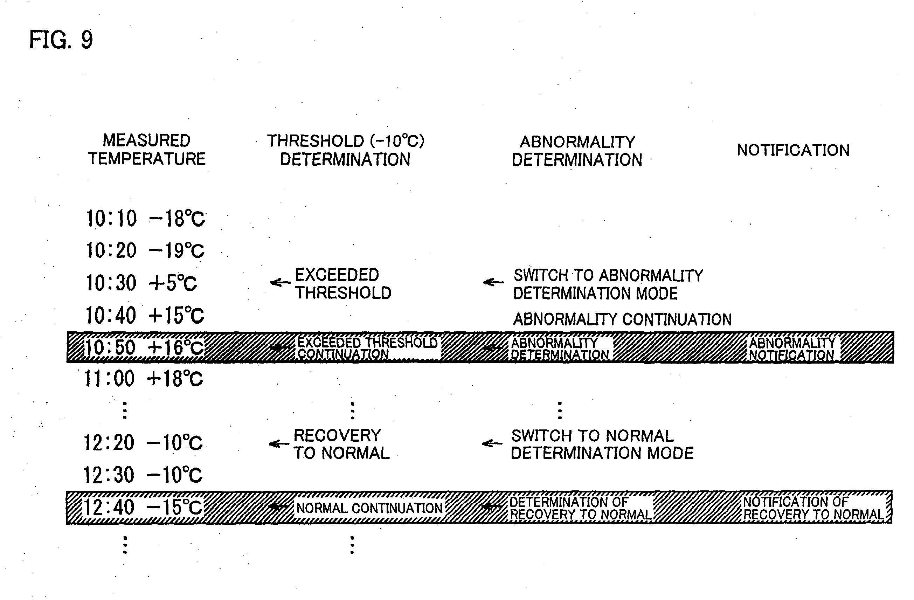

With reference to FIG.9, the processing is explained more in details. For example, as the processing in the step S1 of FIG.6, the sensor information is obtained from the wireless temperature sensor 32 at ten minutes past ten. In the step S2, it is determined whether or not the temperature exceeds the threshold value (-10°C). In this case, because the temperature is -18°C, the processing returns to the step S1. At twenty minutes past ten, the sensor information (temperature -19°C) is obtained from the wireless temperature sensor 32. In this case also, in the step S2, it is determined that the temperature does not exceed the threshold value. Accordingly, the processing returns to the step S1.

At half past ten, when the sensor information (temperature +5°C) is obtained from the wireless temperature sensor 32, it is determined in the step S2 that the temperature exceeds the threshold value (-10°C). Then, the processing shifts to the abnormal mode processing of the step S3.

At this time, in the step S21 (FIG.7), "10:30" is stored as the abnormality outbreak time. In the processing of the step S22, the sensor information (temperature +15°C) is obtained at twenty to eleven. In the step S23, it is determined that the temperature exceeds the threshold value. In the step S24, the present time "10:40" and the abnormality outbreak time "10:30" are compared. In this case, because only ten minutes have elapsed from the abnormality outbreak time, it is determined in the step S25 that the predetermined time (20 minutes) has not elapsed. Accordingly, the processing returns to the step S22.

When the sensor information (the temperature +16°C) is obtained at ten to eleven, it is determined in the step S23 that the temperature exceeds the threshold value. In the step S24, the present time "10:50" and the abnormality outbreak time "10:30" are compared. In this case, because 20 minutes has elapsed from the abnormality outbreak time, it is determined in the step S25 that the predetermined time has elapsed. Then, in the step S26, the abnormality is notified to the ASP center 2. At this time, the ID number specifying the sensor station 21 is transmitted at the same time. A terminal of an operator at the ASP center 2 displays (i) information (for example, a delivery name, delivery destination and the like) for specifying the truck 1 including the sensor station 21 whose abnormality is notified, (ii) a company name of a physical distribution agency that offered the truck 1 the delivery, and the like.

The operator of the ASP center 2 makes contact with the physical distribution agency and tells that the abnormality (temperature rise) has occurred in the truck 1. As the result, the physical distribution agency contacts the driver of the truck 1 and can demand to check a state of the package: Moreover, the abnormality notification, instead of being transferred via the operator, may be directly transferred to the PC 11 or the mobile phone 12 of the physical distribution agency by an e-mail and the like from the server 20 of the ASP center 2.

When the sensor information (temperature + 18°C) is obtained at eleven o'clock as the processing in the step S27, it is determined in the step S28 that the temperature exceeds the threshold value (-10°C). Then, the processing returns to the step S27. Until twenty minutes past twelve thereafter, the sensor information is continuously obtained at ten-minute intervals as the processing of the step S27. However, all the temperatures until twenty minutes past twelve are supposed to exceed the threshold value.

When the sensor information (temperature -10°C) is obtained at twenty minutes past twelve, it is determined that the temperature does not exceed the threshold value in the step S28. In the step 29 (FIG.8), "12:20" is stored as the present time.

When the sensor information (temperature -10°C) is obtained at half past twelve as the processing of the step S30, it is determined in the step S31 that the temperature does not exceed the threshold value. The present time "12:30" is compared with the recovery-to-normal time "12:10". In this case, because only ten minutes has elapsed from the recovery-to-normal time, it is determined in the step S33 that the predetermined time (20 minutes) has not elapsed yet. Then the processing returns to the step S30.

When the sensor information (temperature -15°C) is obtained at twenty minutes to one, it is determined in the step 31 that the temperature does not exceed the threshold value. The present time "12:40" is compared with the recovery-to-normal time "12:10". In this case, because twenty minutes has elapsed from the recovery-to-normal time, it is determined in the step S33 that the predetermined time has elapsed. In the step S34, the recovery to normal is notified to the ASP center 2. This makes it possible for the physical distribution agency to check that the temperature of the package has returned to the normal.

In this way, the temperature abnormality of the package is detected and notified. The abnormality notification is performed in a case where the temperature abnormality continues for a predetermined time (for example, twenty minutes). Accordingly, even if a temporary temperature rise occurs, the temperature information is ignored. Such a temperature rise is caused by that the driver of the truck 1 on a way of transportation opens the door of the container and the like. As the result, the communication cost can be reduced. As well, in a case in which there is the temperature abnormality influencing the package (a high temperature state continues for the predetermined time), the information is notified to the physical distribution agency promptly. As the result, the physical distribution agency can perform highly reliable quality management of the package at low cost.

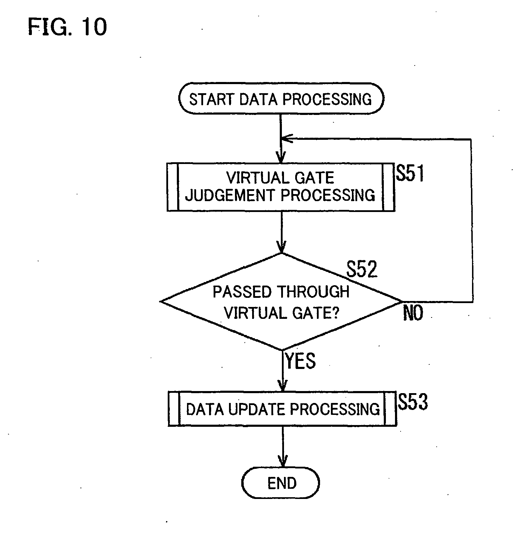

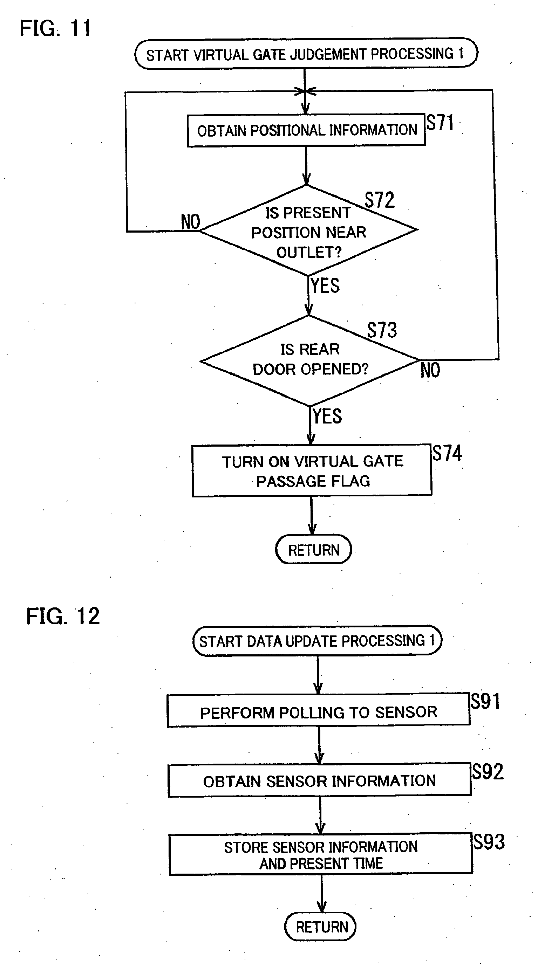

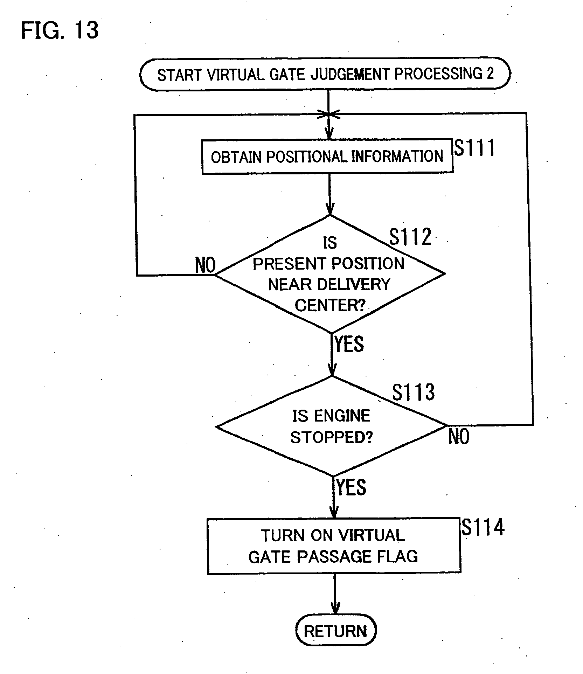

Next, with reference to FIG. 10, the data processing, in which the sensor station 21 processes the data that is accumulated in the sensor station 21, is explained. In a step 51, the processing section 41 executes a virtual gate judgement processing, which is explained later with reference to FIG.11 or FIG.13. This sets a flag showing that there has been passage through a virtual gate (later explained) provided by a combination of predetermined conditions. In a step S52, the processing section 41 judges whether or not there has been passage through the virtual gate. The judgement whether or not there has been passage through the virtual gate is made by judging whether or not the flag mentioned above is ON. In the case where it is judged that there has not been passage through the virtual gate in the step S52, the processing returns to the step S51.

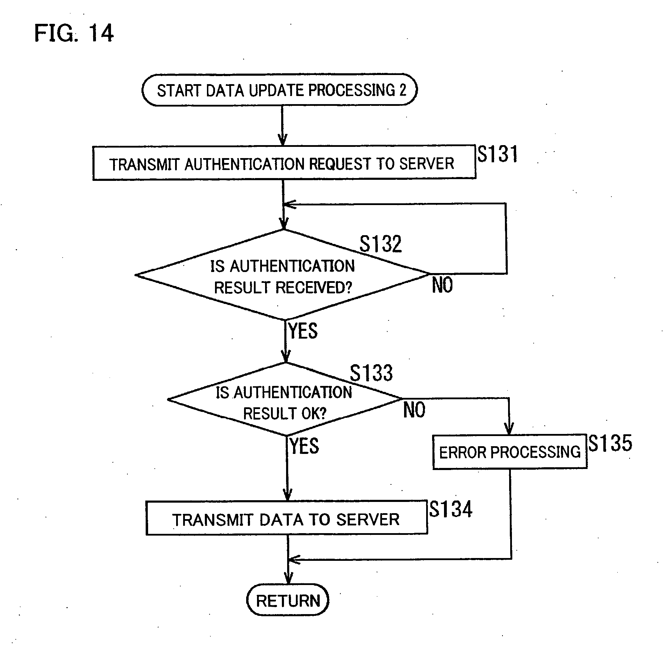

In the step S51, in a case where it is judged that there has been passage through the virtual gate, the processing section 41 proceeds to a step S53 and executes a data update processing, which is later explained with reference to FIG.12 or FIG.14. This causes the data accumulated in the sensor station 21 to be updated and transmitted.

The data processing, which is explained above with reference to FIG. 10, forms, so to say, a program model included in the processing section 41 of the sensor station 21. The sensor station 21 includes plural sensing functions such as the GPS section 44, the sensor information obtaining section 45, the timer built in the processing section 41 and the like. The sensor station 21 produces a predetermined condition, that is, a virtual boundary (virtual gate) by a combination of sensing results of the plural sensing functions (the processing in the step 51).

For example, in a case where the present position calculated by the GPS section 44 is within a predetermined range and further the sensor information obtained from the sensor information obtaining section 45 matches a predetermined content, it is regarded as passage through one virtual gate. In a step 53, a data update processing corresponding to passage through the virtual gate is executed. This makes it possible to simplify a program structure. The function of the sensor station 21 also can be realized at low cost. As well, various processing can be executed by effectively using the plural sensing functions included in the sensor station 21.

Next, with reference to FIG.11, a virtual gate judgement processing 1 is explained, the virtual gate judgement processing being one example of the virtual gate judgement processing of the step S51 in FIG. 10.

In a step S71, the processing section 41 causes the GPS section 44 to calculate the present position and obtains positional information. In a step S72, the processing section 41 judges whether or not the present position is near an outlet of a delivery destination. The positional information of the outlet of the delivery destination is registered and stored in the storage section 43 beforehand when the sensor station is installed to the truck 1. In the step S72, it is judged whether or not the present position obtained in the step S71 is within, for example, a radius of 200 meters of the outlet of the delivery destination.

In a case where it is judged that the present position is not near the outlet of the delivery destination in the step S72, the processing returns to the step S71. On the other hand, in a case where it is judged in the step S72 that the present position is near the outlet of the delivery destination, the processing proceeds to the step S72.

In a step S73, the processing section 41 judges whether or not the container door is open on a basis of the sensor information from the door sensor 31 provided near the container door of the truck 1, the sensor information obtained from the sensor information obtaining section 45. In a case where it is judged that the door is not open, the processing returns to the step S71. In a case where it is judged in the step S73 that the door is open, the processing section 41 proceeds to a step S74 and turns a virtual gate passage flag ON.

In this example, an example, in which the positional information is obtained by causing the GPS section 44 to calculate the present position in the step S71, is explained. However, it is also possible to arrange such that: (i) the short-range wireless communication with the sensor station 21 is performed near the outlet of the delivery destination by, for example, the PC and the like provided at the outlet of the delivery destination; (ii) by the short-range wireless communication, the information specifying the outlet of the delivery destination is transmitted to the sensor station 21 from the PC; and (iii) on the basis of the information, the position is specified.

Next, with reference to FIG.12, a data update processing 1, which is one example of the step S53 processing of FIG.10, is explained. This data update processing 1 is executed when the virtual gate passage flag is turned ON by the virtual gate judgement processing 1 mentioned above by referring to FIG.11.

In a step S91, the processing section 41 performs polling to the wireless temperature sensor 32 via the sensor information obtaining section 45. As mentioned above, the wireless temperature sensor 32 transmits, to the sensor station 21, the temperature surrounding the wireless temperature sensor 32 as the sensor information at the point when the wireless temperature sensor 32 receives the polling signal from the sensor station 21.

In a step S92, the processing section 41 obtains the sensor information (temperature) from the sensor information obtaining section 45. In a step S93, the processing section 41 stores, into the storage section 43, the sensor information obtained in the step S92 and the present time.

The data processing is performed in this way. In the virtual gate judgement processing 1 of FIG.11, a case, in which (i) the present position of the truck 1 (the sensor station 21) is near the outlet of the delivery destination and also (ii) the container door of the truck 1 is open, is set as a virtual gate. It is regarded that passage through such a virtual gate is indicative of the truck 1 having arrived at the outlet of the delivery destination and having started to unload the package. Accordingly, the sensor station 21 stores the temperature at the time when the package has arrived at the outlet of the delivery destination by the data update processing 1 in FIG.12. As mentioned above, the wireless temperature sensor 32 usually transmits the sensor information to the sensor station 21 at ten-minute intervals. By the data update processing 1, an accurate temperature at the time when the package has arrived is stored.

Next, with reference to FIG.13, the virtual gate judgement processing 2, which is another example of the virtual gate judgement processing of the step S51 of FIG.10, is explained.

In a ,step, S111, the processing section 41 causes the GPS section 44 to calculate the present position and obtains the positional information. In a step S112, it is judged whether or not the present position is near the delivery center 7. The positional information of the delivery center 7 is assumed to be registered when the sensor station 21 is installed to the truck 1 and to be stored in the storage section 43 beforehand. In the step S112, it is judged whether or not the present position obtained in the step S111 is within, for example, a radius of 500 meters of the delivery center 7.

Whether or not it is near the delivery center 7 may be judged not on the basis of the positional information by the GPS section 44 but on the basis of whether or not the communication by the communication section 42 has become possible. As mentioned above, the communication network such as the short-range wireless communication network or the wireless LAN is provided at the delivery center 7. Accordingly, the sensor station 21 can perform the wireless communication via the short-range communication, the wireless LAN or the like on premises of the delivery center.

In the step S112, when it is judged that the present position is not near the delivery center 7, the processing returns to the step S111. On the other hand, when it is judged that the present position is near the delivery center 7 in the step S112, the processing proceeds to a step S114.

In the step S114, the processing section 41 judges whether or not an engine is stopped on the basis of the sensor information, which is obtained by the sensor information obtaining section 45, from the engine sensor. When it is judged that the engine is not stopped, the processing returns to the step S111. When it is judged that the engine is stopped in the step S114, the processing section 41 proceeds to the step S114 and turns the virtual gate passage flag ON.

Next, with reference to FIG.14, the data update processing 2, which is another example of the step S53 processing of FIG.10, is explained. This data update processing 2 is executed when the virtual gate passage flag is turned ON by the virtual gate judgement processing 2 mentioned above with referring to FIG.13.

In a step S131, the processing section 41 accesses, for example, the wireless LAN of the delivery center 7 via the communication section 42 to transmit an authentication request to the server 35 of the delivery 7 via the wireless LAN. At this time, an ID number, a predetermined password and the like, which specify the sensor station 21, are transmitted to the server 35. The server 35 judges whether or not the ID number and the password transmitted from the sensor station 21 are a proper ID number and a proper password, which has been registered beforehand. In the case where it is judged that the ID number and the password are proper, the server 35 transmits an authentication result "OK" to the sensor station 21 via the wireless LAN.

In a step S132, the processing section 41 judges whether or not the authentication result is received from the server 35 via the communication section 42 and waits until it is judged that the authentication result is received.

When it is judged in the step S132 that the authentication result is received, the processing section 41 proceeds to the step S133. In the step S133, it is judged whether the authentication result is "OK" or not. When it is judged that the authentication result is "OK", the processing section 41 proceeds to a step S134. In the step S134, the data stored in the storage section 43 is transmitted to the server 35. At this time, for example, the package temperature (outputted from the wireless temperature sensor 32) measured at ten-minute intervals as illustrated in FIG.9 is transmitted as the data.

In the step S133, when it is judged that the authentication result is not "OK", the processing section 41, proceeds to a step S135 and executes error processing

In this way, the data processing is performed. In the virtual gate judgemnet processing 2 as in FIG. 13, a case, in which (i) the present position of the truck 1 (the sensor station 21) is near the delivery center 7 and also (ii) the engine of the truck 1 is stopped, is set as the virtual gate. It is regarded that passage through such a virtual gate is indicative of the truck 1 having finished the delivery. Then, the sensor station 21 transmits the data accumulated by then to the server 35 of the delivery center 7 in the data update processing 2 as in FIG.14. As mentioned above, the data obtained by the server 35 of the delivery center 7 is transmitted to the server 20 of the ASP center 2.

In the step S134 of FIG.14 as mentioned above, an example in which the package temperature (outputted from the wireless temperature sensor 32) measured at ten-minute intervals is transmitted as the data is explained. However, the data to be transmitted is not limited to this. If necessary, the processing section 41 may be arranged to transmit other information (for example, positional information) obtained or stored by the sensor station 21.

This arrangement causes a large amount of data accumulated in the sensor station 21 to be transmitted by a batch processing via the wireless LAN of the delivery center 7 during the package transportation carried out by the truck 1. Accordingly, this arrangement makes it possible to perform data transmission at lower cost than, for example, the arrangement in which the sensor station 21 transmits the data in real time by using the packet communication function of the mobile phone or the like during the time that the truck 1 is running.

Both of the virtual gate judgement and the data update in FIG.11 and FIG.12 or the virtual gate judgement and the data update in FIG.13 and FIG.14 are automatically executed without any human operation by making use of the sensing functions of the sensor station 21. Certainly, the present embodiment may be arranged such that the data update processing as illustrated in FIG.12 or FIG.14 is executed, for example, when the driver of the truck 1 enters a predetermined command into an input section, which is not illustrated, of the sensor station 21, instead of the virtual gate judgement processing as mentioned above with reference to FIG.11 or FIG.13.

However, as in the virtual gate judgement processing 1 of FIG.11, for storage of the package temperature at the time when (i) the truck 1 arrives at the outlet of the delivery destination and (ii) the package (goods) is delivered to the outlet of the delivery destination, a timing for measuring the package temperature becomes very important for the physical distribution agency. For example, in a case when (a) the driver of the truck delays in entering a command because of being busy in responding to a stuff in the outlet of the delivery destination or (b) the driver of the truck 1 forgets to enter the command, it becomes impossible for the physical distribution agency to acquire the package temperature at the point when the package arrives at the outlet of the delivery destination. In this occasion, when the package (e.g. food) has been deteriorated in quality at the point in time when it is sold at the outlet and obtained by a consumer, there is the possibility that where responsibility lies could become ambiguous because it becomes not clear whether (i) there has been the problem in the quality management on the transportation process carried out by the physical distribution agency or (ii) there has been the problem in the quality management by the outlet after the transportation process.

Moreover, for the physical distribution agency using the chartered truck, there are many unspecific drivers. Accordingly, it is very difficult to educate the drivers in the operation of the sensor station 21, rules for the temperature measurement and the like beforehand.

In order to solve the problem, according to the present invention, as mentioned above with reference to FIG.10, the data processing is executed by effectively using the sensing function of the sensor station 21. This makes it possible to carry out the package temperature management for sure even in a case where the package is transported by a chartered truck. As the result, the highly reliable quality management at low cost becomes possible.

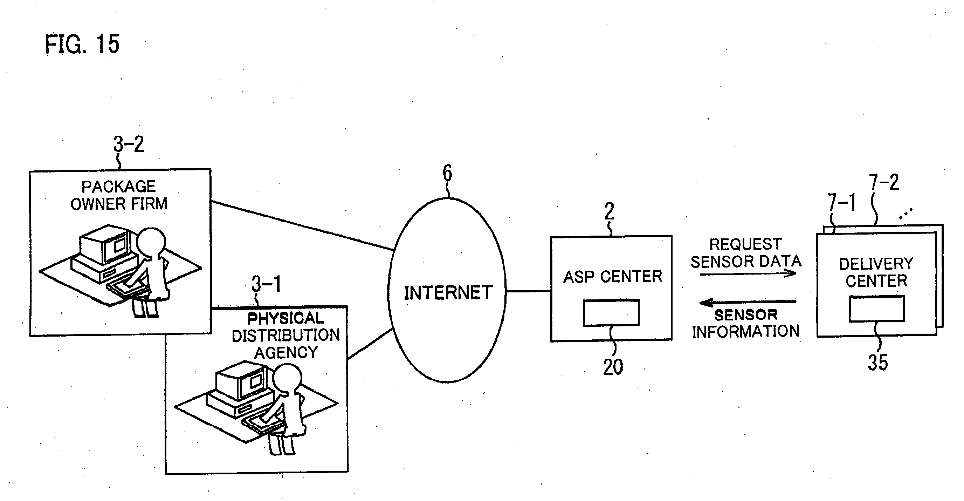

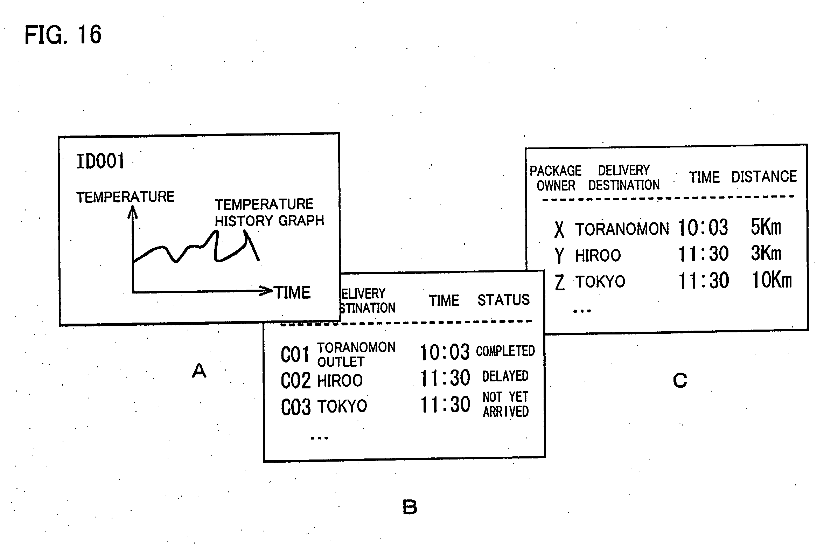

Next, with reference to FIG.15 and FIG.16, an example in which the data transmitted from the sensor station 21 is used by the user 3 is explained. In FIG.15, the server 20 of the ASP center 2 constructs a database on the basis of the sensor information data obtained in communication with the servers 35 of plural delivery centers 7. At this time, information such as the delivery name, the delivery destination, and the package of the truck 1 having the sensor station 21 installed therein, is retrieved on the basis of the ID number of the sensor station 21. Then, the retrieved information is associated with the information of the package temperature measured with the passage of time, which has been transmitted from the sensor station 21, and is compiled into a database.

The user 3, who has made a contract with the ASP center 2 beforehand, can (i) access the server 20 via the network 6 such as the Internet by using the PC 11 that the user 3 owns and (ii) obtain the item in the database of the server 20. Here, when the user 3 accesses the server 20, the user 3 is authenticated from an ID, a password and the like that the user 3 is an authorized user.

Other than the physical distribution agency 3-1 who entrusts the package transportation to the truck 1 that is a chartered truck, a package owner firm (for example, a food company and a retailer) entrusting the physical distribution to the physical distribution agency 3-1 as well can access the ASP center 2 as the user 3.

FIG.16 is a diagram of an exemplary screen displayed on the PC 11 of the user 3.

A screen A of FIG.16 is a temperature history window displaying package temperature variation along with the elapsed time. The user 3 can call up the temperature history screen as illustrated in the screen A of FIG.16 by specifying, for example, the delivery name of the truck. Storage of this information allows the physical distribution agency 3-1 (or the package owner firm 3-2) to prove to the package owner firm 3-2 (or a consumer) that the temperature management on the transportation process of the package such as food is properly performed.

Moreover, according to need, a delivery status of the truck (information indicative of whether the package has arrived within a scheduled time) as illustrated in the screen B of FIG.16 or a daily travel report of the truck (information showing how long the truck has traveled so far) as illustrated in a screen C of FIG.16 and the like may be displayed.

In the server 20, the data of many trucks (sensor stations) is stored. Only the information related to the user 3 among the information is transmitted to the PC of the user 3. For example, when the package owner firm X accesses the server 20 and obtains the information, the daily travel report and the like of trucks of the package owner firm Y or Z is not displayed.

In this way, the user 3 can easily obtain the information such as the temperature variation of the package (truck) and the like by using the PC that the user 3 owns. The information such as the package temperature variation is produced on the basis of the content of the database in the server 20 of the ASP center 2. Accordingly, the user 3 can easily improve accuracy of the quality management, but does not need to bear the investment and the like for constructing a new information system.

All the devices, such as the sensor station 21 and the wireless temperature sensor 32, which are necessary for constructing the database of the server 20 can be easily installed and detached as mentioned above. Accordingly, even the physical distribution agency using the chartered truck can easily improve the accuracy of the quality management. As the result, it becomes possible to curtail physical distribution cost and further to realize highly reliable quality management.

The abnormality determination processing as mentioned above with reference to FIG.6 is explained taking as an example the case in which the ASP center 2 is notified only in a case where the abnormality of the temperature has been continued for equal to or more than the predetermined time. Moreover, the virtual gate judgement processing 2 and the data update processing 2 as mentioned above with reference to FIG.12 and the FIG.14 are explained taking as an example the case in which after the truck 1 completes the delivery, the data of the sensor station 21 is transmitted by the batch processing. However, there may be user's need for obtaining the data of the sensor station 21 in a state closer to real time. To respond to this need, for example, communications between the sensor station 21 and the ASP center 2 may be performed at predetermined intervals (for example, every five minutes) for data transmission. However, this increases the communication cost naturally.

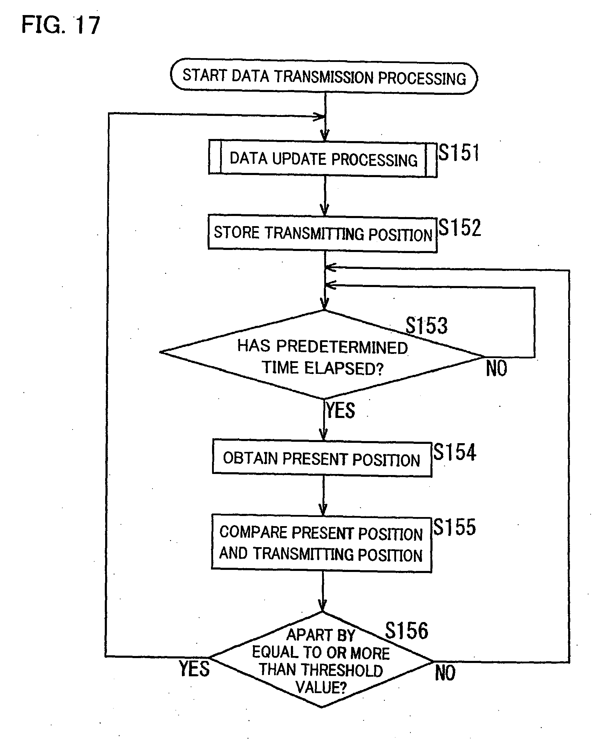

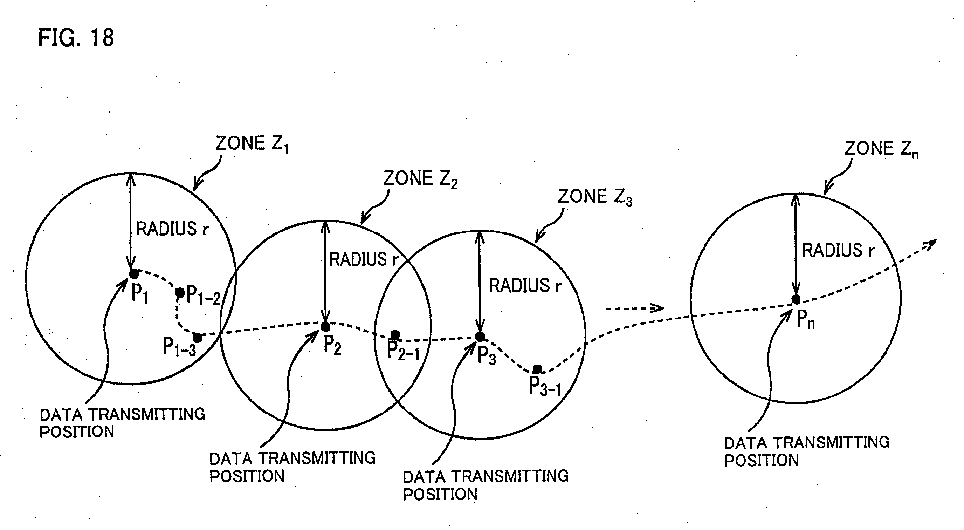

With reference to FIG.17 and FIG.18, the following will explain the data transmission processing of controlling the data transmission of the sensor station 21 on the basis of time and traveled distance.

In a step S151, the processing section 41 executes the data update processing. This processing is processing for transmitting the data to the server from the sensor station 21. Because the processing is the same as the data update processing 2 explained above with reference to FIG. 14, the explanation in details is omitted. However, in the processing in FIG.14, the sensor station 21 communicates with the server 35 of the delivery center 7 via the wireless LAN or the like. On the other hand, in the processing of the step S151, the sensor station 21 communicates with the server 20 of the ASP center 2 via the mobile network 5.

In a step S152, the processing section 41 obtains the positional information of the present position from the GPS section 44 and stores the present position into the storage section 43 as a transmitting position. In a step S153, the processing section 41 determines whether or not a predetermined time (for example, 5 minutes) has been elapsed. The processing section 41 waits until it is determined that the predetermined time has elapsed.

In the step S153, when it is determined that the predetermined time has been elapsed, the processing section 41 proceeds to a step S154. Then the processing section 41 newly obtains the positional information of the present position from the GPS section 44. In a step S155, the processing section 41 compares the present position obtained in the step S154 and the transmitting position stored in the step S152.

In a step S156, the processing section 41, as a result of the comparison in the step S155, determines whether or not the present position is apart from the transmitting position by equal to or more than the threshold value. When it is determined that the present position is not apart from equal to or more than the threshold value, the processing returns to the step S153 and the processing subsequent to the step S153 is repeatedly executed. When it is determined that the present position is apart from the transmitting position by equal to or more than the threshold value in the step S156, the processing returns to the step S1 and the processing subsequent to the step S1 is repeatedly carried out.

More detailed explanation follows with reference to FIG.18. Assume that (i) the present position of the truck 1 is at a position P1, (ii) the processing of the step S151 is executed and (iii) the data is transmitted from the sensor station 21. At this time, in the step S152, the position P1 is stored as the transmitting position. Then, after five minutes, the truck 1 is assumed to move to the position P1-2. At this point, the position P1-2 is obtained as the present position in the step S154 and the position P1-2 and the position P1 are compared in the step S155.

In the step S156, it is determined whether or not the position P1-2 and the position P1 are apart from each other by equal to or more than the threshold value (for example, a distance r). In this case, because the position P1-2 and the position P1 are not apart from each other by equal to or more than the threshold value, the processing returns to the step S153.

Then, after five minutes, the truck 1 proceeds to the position P1-3. At this time, the position P1-3 and the position P1 are compared in the step S155. In the step S156, it is determined that the position P1-3 and the position P1 are not apart from each other by equal to or more than the threshold value (for example, the distance r). Then the processing returns to the step S153.

Then, after five minutes, the truck 1 advances to a position P2. In this case, it is determined that the position P2 and the position P1 are apart from each other by equal to or more than the threshold value (for example, the distance r). The processing returns to the step S151 and the data is transmitted from the sensor station 21. The position P2 is newly stored as the transmitting position.

In other words, when the data is transmitted at the position P1, the position of the truck 1 (sensor station 21) is measured at five-minute intervals thereafter. When the truck 1 is in a zone Z1 illustrated by a circle of a radius r with its center at the position P1, the data transmission is not carried out. When the truck 1 goes out of the zone Z1, the data transmission is newly performed.

Assume that the truck 1 having passed through the position P2 moves to a position P2-1, a position P3, a position P3-1, ···, a position Pn every five minutes. Then, the data transmitting position becomes the position P3, ···, the position Pn.

This makes it possible to reduce the number (cost) of communication performances, compared with a case where the data is transmitted, for example, at five-minute intervals. Meanwhile, as compared with an example in which the data of the sensor station 21 is transmitted by the batch processing after the truck 1 completes the delivery as mentioned above with reference to FIG.13 and FIG. 14, the data closer to the real time can be provided.

Although the step for executing a series of the processing mentioned above in this specification certainly includes the processing performed in time sequence according to an order described, the step is not necessarily processed in the time sequence. The step also includes the processing performed in parallel or individually.

Moreover, in the explanation mentioned above, as an example, the case in which the temperature information is obtained as the sensor information is taken. However, the present invention is not limited to this. Namely, the sensor station 21 (information processing device) can obtain the sensor information not from the wireless temperature sensor 32 but from various other sensors such as a vibration sensor, a humidity sensor, a sound sensor, and an odor sensor.

The sensor information can be used as quality management information of the package (goods) preferably. For example, the truck, a cargo train, a transport boat or the like (a traveling object) transports glass products and/or earthenware products, which are extremely fragile, as the package. In this case, if the sensor station 21 is installed so that vibration information surrounding the package is detected by the vibration sensor, it becomes possible to accurately record and report whether or not the package is transported in a safe condition that there are few vibrations.

In this way, when the sensor station 21 obtains not the temperature information but other sensor information such as the vibration information, the humidity information, the sound information, the odor information and the like and uses these as the package (goods) quality management information, the abnormality determination processing, the abnormal mode processing, the data processing, the virtual gate judgment processing 1, the virtual gate judgement processing 2, the data update processing 1, the date update processing 2 and each processing of the ASP center mentioned above may be based on not the temperature information but the other sensor information mentioned above.

Moreover, the sensor station 21 (information processing device) may use a combination of different pieces of sensor information from plural information sensors. For example, the sensor station 21 can accordingly combine sensor information obtained from one information sensor and sensor information from another information sensor, and treat the combined information as new sensor information.

Further, the components of the sensor station 21 (the information processing unit) of the embodiment, as well as the process steps, may be implemented by controlling a keyboard or other input means, a display or other output means, or an interface circuit or other communication means with a CPU (Central Processing Unit) or other compute means executing information processing programs recorded in ROM (Read Only Memory), RAM (Random Access Memory), or other storage means.

Therefore, the various functions of the sensor station 21 (the information processing unit) of the present embodiment, as well as various process steps, are implemented by a computer equipped with the various means simply reading a storage medium containing the program for execution of the program. In addition, the various functions and process steps are implemented on a given computer by recording the information processing program on a removable storage medium.

The storage medium may be a memory (not shown) for process steps on a microcomputer. For example, the program medium may be something like a ROM. Alternatively, the program medium may be such that a program reader device (not shown) as an external storage device may be provided in which a storage medium is inserted for reading.

In addition, in any case, the stored program is preferably executable on access by a microprocessor. Further, it is preferred if the program is retrieved, and the retrieved program is downloaded to a program storage area in a microcomputer to execute the program. The download program is stored in a main body device in advance.

In addition, the program medium may be a storage medium constructed separably from a main body. The medium may be tape based, such as a magnetic tape or cassette tape; disc based, such as a flexible disc or hard disk including a magnetic disc and CD (Compact Disk) /MO (Magnetic Optical disk) /MD (Mini Disk) /DVD (Digital Versatile Disk); card based, such as an IC card (including a memory card); or a semiconductor memory, such as a mask ROM, EPROM (Erasable Programmable Read Only Memory), EEPROM (Electrically Erasable Programmable Read Only Memory), and a flash ROM. All these types of media hold the program in a fixed manner.

In contrast, if the system is arranged to connect to the Internet or another communication network, the medium is preferably a storage medium which holds the program in a flowing manner so that the program can be downloaded over the communication network.

Further, if the program is downloaded over a communication network in this manner, it is preferred if the download program is either stored in a main body device in advance or installed from another storage medium.

As mentioned above, an information processing device according to the present invention is an information processing device, installed to a traveling object, which performs wireless communications with a sensor, including: sensor information obtaining means for obtaining sensor information that the sensor outputs; storage means for storing the sensor information; positional information obtaining means for obtaining positional information determining a position of the information processing device; and processing means for executing predetermined processing on the basis of the sensor information and the positional information.

The information processing device is, for example, a sensor station that obtains the sensor information and transmits the obtained sensor information. The traveling object mentioned above is, for example, a truck. The sensor information obtaining means is, for example, a wireless communication unit. The storage means is, for example, a hard disk drive or a nonvolatile memory. The positional information obtaining means is, for example, a GPS. The processing means is, for example, a microcomputer.

The information processing device further includes a communication means for performing wireless communications with another information processing device which manages the sensor information of the sensor, wherein the processing means can, when having determined that a value of the sensor information has exceeded a predetermined threshold value for equal to or more than a predetermined time, transmit information indicating abnormality to the other information processing device through the communication means. This arrangement makes it possible to promptly notify abnormality detected by the sensor.

The other information processing device is, for example, a server provided at an information communication processing center or a delivery center. The communication means is, for example, a communication unit performing a mobile communication or a short-range wireless communication.

It is preferable that the communication means performs the wireless communication in a packet switching system. The packet switching system minimizes the amount and cost of communications according to the amount of information even when the sensor information is intermittently obtained, thus allowing for efficient communications.

Moreover, it is preferable that the communication means is a mobile phone. Because a mobile phone is widespread, the adoption of the mobile phone makes it possible to realize the communication means efficiently. Further, an arrangement of the information processing device can be made simple and small.

In the information processing device, the processing means determines (i) whether or not a position indicated by the positional information, which has been obtained by the positional information obtaining means, is near a destination of the traveling object, and (ii) whether or not the sensor information matches a predetermined content; and the storage means, when the processing means has determined that the position indicated by the positional information, which has been obtained by the positional information obtaining means, is near a first destination of the traveling object, and that the sensor information matches a predetermined first content, stores determination time together with the sensor information of the sensor at the determination time. This arrangement can make it sure that the sensor information is stored at a point that the sensor information should be stored.

The first destination is, for example, a delivery destination of the package loaded on the truck. The first content is, for example, an "open" state indicated by the output from the door sensor of the truck container.

In the information processing device, the communication means transmits the time and the sensor information to the other information processing device when the traveling object has traveled a predetermined distance. This arrangement makes it possible to collect the sensor information accumulated in the information processing device in a state closer to real time at low cost.

In the information processing device, the communication means further transmits the time and the sensor information stored in the storage means to the other information processing device by a short-range wireless communication, when the processing means has determined that (i) the position indicated by the positional information, which has been obtained by the positional information obtaining means, is near a second destination of the traveling object and (ii) the sensor information matches a predetermined second content. This arrangement makes it possible to collect the sensor information accumulated in the information processing device at low cost.

The second destination is, for example, a delivery center of the truck. The second content is, for example, a "stopped" state indicated by the output from the engine sensor of the truck.

In the information processing device, the information stored in the other information processing device can be used as the quality management information of the package loaded onto the truck and delivered to the first destination.

Moreover, it is also preferable that the traveling object is the one to transport the package. According to this arrangement, the information processing device of the present invention can obtain the temperature information or the vibration information of the package as the sensor information outputted from the sensor. For example, in the information processing device, the traveling object is a truck. The sensor is installed inside the container of the truck so as to output a temperature of the package loaded onto the truck as the sensor information.

This arrangement makes it possible for the information processing device and the other information processing device to efficiently use the sensor information as the quality management information of the package. Namely, in the information processing system including the information processing device and the other information processing device, it becomes possible to use the sensor information as the quality management information of the package.

A vehicle of the present invention including a container keeping a loaded package at a constant temperature, including: a sensor, installed inside the container, which measures a temperature and outputs sensor information indicating the temperature measured; and a mobile wireless terminal, installed near a driver seat of the vehicle, which communicates with the sensor by wireless so as to obtain the sensor information of the sensor, the mobile wireless terminal transmitting the sensor information, which has been obtained by the mobile wireless terminal, to an information processing device by wireless communication.

The vehicle of the present invention is arranged such that (i) a temperature is measured by the sensor installed inside the container; (ii) the sensor information indicating the measured temperature is outputted; (iii) the mobile wireless terminal installed near the driver seat of the vehicle communicates with the sensor by the wireless communication to obtain the sensor information of the sensor; and (iv) the sensor information obtained by the mobile wireless terminal is transmitted to the information processing device by the wireless communication, thus allowing for a highly reliable package temperature management.

An information processing method according to the present invention is an information processing method of an information processing device, installed to a traveling object, which performs wireless communications with a sensor, the information processing method including: a sensor information obtaining step of obtaining sensor information that the sensor outputs; a storing step of storing the sensor information; a positional information obtaining step for obtaining positional information determining a position of the information processing device; and a processing step for executing predetermined processing on the basis of the sensor information and the positional information.

Moreover, an information processing method according to the present invention is an information processing method of an information processing device, installed to a traveling object, which processes sensor information that a sensor outputs, the information processing method including: a sensor information obtaining step of obtaining the sensor information that the sensor outputs; a storing step of storing the sensor information; and a wireless transmission step of transmitting the sensor information stored in the storing step by wireless to another information processing device, according to a position of the information processing device.

According to the information processing device and the information processing method of the present invention, it is possible to reliably manage the sensor information at low cost.

Moreover, the information processing device and the information processing method of the present invention can be realized by providing a computer with the foregoing information processing program or a computer-readable storage medium storing the information processing program.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### INDUSTRIAL APPLICABILITY

An information processing device, information processing method, an information processing system, an information processing program, a storage medium, and a vehicle of the present invention allow for especially a highly reliable quality management at low cost. The present invention is especially suitable for quality management of a package in the transportation of the package.

## Claims

1. An information processing device, installed to a traveling object, which performs wireless communications with a sensor, comprising:
sensor information obtaining means for obtaining sensor information that the sensor outputs;
storage means for storing the sensor information;
positional information obtaining means for obtaining positional information determining a position of the information processing device; and
processing means for executing predetermined processing on the basis of the sensor information and the positional information.

2. The information processing device according to Claim 1, further comprising
communication means for performing wireless communications with another information processing device which manages the sensor information of the sensor,
wherein the processing means, when having determined that a value of the sensor information has exceeded a predetermined threshold value for equal to or more than a predetermined time, transmits information indicating abnormality to the other information processing device through the communication means.

3. The information processing device according to Claim 2, wherein
after having determined that the value of the sensor information has exceeded a predetermined threshold value for equal to or more than a predetermined time, the processing means, when having determined that the value of the sensor information has become the threshold value or less, transmits information indicating recovery to normal to the other information processing device through the communication means.

4. The information processing device according to Claim 2 or 3, wherein
the communication means performs the wireless communication in a packet switching system.

5. The information processing device according to any one of Claims 2 through 4, wherein
the communication means is a mobile phone.

6. The information processing device according to any one of Claims 1 through 5, wherein:
the processing means determines (i) whether or not a position indicated by the positional information, which has been obtained by the positional information obtaining means, is near a destination of the traveling object, and (ii) whether or not the sensor information matches a predetermined content; and
the storage means, when the processing means has determined that the position indicated by the positional information, which has been obtained by the positional information obtaining means, is near a first destination of the traveling object, and that the sensor information matches a predetermined first content, stores determination time together with the sensor information of the sensor at the determination time

7. The information processing device according to Claim 6, wherein
the communication means transmits the time and the sensor information to the other information processing device when the traveling object has traveled a predetermined distance.

8. The information processing device according to Claim 6 or 7, wherein
the communication means further transmits the time and the sensor information stored in the storage means to the other information processing device by a short-range wireless communication, when the processing means has determined that (i) the position indicated by the positional information, which has been obtained by the positional information obtaining means, is near a second destination of the traveling object and (ii) the sensor information matches a predetermined second content.

9. The information processing device according to any one of Claims 1 through 8, wherein
the traveling object transports a package.

10. The information processing device according to Claim 9, wherein
the sensor outputs temperature information of the package as the sensor information.

11. The information processing device according to Claim 9, wherein
the sensor outputs vibration information of the package as the sensor information.

12. The information processing device according to any one of Claims 1 through 11, wherein
the traveling object is a truck and the sensor is installed in a container of the truck.

13. An information processing system including the information processing device and the other information processing device according to any one of Claims 9 through 12, wherein
the other information processing device uses the sensor information as quality management information of the package.

14. A vehicle being provided with the information processing device as in any one of Claims 9 through 12, the vehicle serving as the traveling object.

15. A vehicle including a container keeping a loaded package at a constant temperature, comprising:
a sensor, installed inside the container, which measures a temperature and outputs sensor information indicating the temperature measured; and
a mobile wireless terminal, installed near a driver seat of the vehicle, which communicates with the sensor by wireless so as to obtain the sensor information of the sensor,
the mobile wireless terminal transmitting the sensor information, which has been obtained by the mobile wireless terminal, to an information processing device by wireless communication.

16. An information processing method of an information processing device, installed to a traveling object, which performs wireless communications with a sensor, the information processing method comprising:
a sensor information obtaining step of obtaining sensor information that the sensor outputs;
a storing step of storing the sensor information;
a positional information obtaining step for obtaining positional information determining a position of the information processing device; and
a processing step for executing predetermined processing on the basis of the sensor information and the positional information.

17. An information processing method of an information processing device, installed to a traveling object, which processes sensor information that a sensor outputs, the information processing method comprising:
a sensor information obtaining step of obtaining the sensor information that the sensor outputs;
a storing step of storing the sensor information; and
a wireless transmission step of transmitting the sensor information stored in the storing step by wireless to another information processing device, according to a position of the information processing device.

18. An information processing program causing a computer to serve as the information processing device according to any one of Claims 1 through 12.

19. An information processing program causing a computer to execute the information processing method according to Claim 16 or 17.

20. A computer-readable storage medium storing the information processing program according to Claim 18 or 19.
